# EUROPEAN PATENT APPLICATION

(11) **EP 4 589 809 A1**
(43) Date of publication of application: **23.07.2025**
(21) Application number: 23882625.9
(22) Date of filing: 24.10.2023
(51) Int. Cl.: H02J 50/12, H02J 50/80

(54) **WIRELESS POWER RECEPTION DEVICE**

(30) Priority: 27.10.2022 JP 2022172334
(71) Applicant: Murata Manufacturing Co., Ltd., Nagaokakyo-shi, Kyoto 617-8555 (JP)
(72) Inventor: NAGAI, Takahiro, Nagaokakyo-shi, Kyoto 617-8555 (JP); HOSOTANI, Tatsuya, Nagaokakyo-shi, Kyoto 617-8555 (JP)
(74) Representative: Laufhütte, Dieter
(86) International application number: PCT/JP2023/038303
(87) International publication number: WO 2024/090420

(57) **Abstract**

A wireless power receiving device (10) includes: a first power receiving alternating-current circuit including a power receiving resonance circuit (21) and a rectifier circuit (31); a first power receiving direct-current circuit including a smoothing circuit (41) and a load circuit (50); a second power receiving alternating-current circuit including a rectifier circuit (32); a second power receiving direct-current circuit including a smoothing circuit (42); and a connection line (700) that electrically connects the first power receiving direct-current circuit and an electronic control circuit (60). The electronic control circuit (60) includes a ground terminal (PG). The connection line (700) electrically connects a direct current reference potential (PDCL) of the first power receiving direct-current circuit and the ground terminal (PG) through an impedance circuit (70). In the impedance circuit (70), an impedance value is set so that a direct current potential of the ground terminal (PG) is the same as the direct current reference potential (PDCL) of the first power receiving direct-current circuit and is stabilized and so that a first alternating current is kept from flowing from the power receiving direct-current circuit to the connection line (700).

## Description

The present invention relates to a wireless power receiving device that performs wireless power reception and wireless communication.

Patent Document 1 discloses a circuit apparatus including an RFID and a wireless power receiving circuit. It is described that, in the circuit apparatus disclosed in Patent Document 1, when the ground potential and the reference potential of the wireless power receiving circuit and the RFID are connected to each other, there is a current that flows from the wireless power receiving circuit to the RFID.

In the circuit apparatus disclosed in Patent Document 1, the wireless power receiving circuit has a symmetrical circuit configuration to suppress the current that flows from the wireless power receiving circuit to the RFID.

In some cases, however, such a method in the circuit apparatus disclosed in Patent Document 1 may reduce flexibility in the design of the wireless power receiving circuit and make it difficult to configure the wireless power receiving circuit with desired power reception characteristics.

Furthermore, according to U.S. Patent No. 10348130, for example, when the wireless power receiving circuit has an asymmetrical circuit configuration, it is impossible to suppress a current that flows from the wireless power receiving circuit to a communication circuit including the RFID. This causes leakage of a noise current generated in the wireless power receiving circuit to the communication circuit.

Furthermore, when the wireless power receiving circuit and the communication circuit are not connected to each other, the direct current reference potential of the wireless power receiving circuit does not coincide with the ground potential of the communication circuit, destabilizing the ground potential of the RFID or other elements.

Hence, the present invention aims to provide a wireless power receiving device that makes it possible to stabilize the ground potential of a communication circuit and suppress leakage of a noise current generated in a wireless power receiving circuit to the communication circuit.

A wireless power receiving device according to the present invention includes: a power receiving resonance circuit including a power receiving coil and a power receiving resonance capacitor; a power receiving circuit electrically connected to the power receiving resonance circuit; a load circuit that is electrically connected to the power receiving circuit and is driven by output power from the power receiving circuit; and an electronic control circuit that performs predetermined electrical signal processing. The power receiving circuit includes a first rectifier circuit that rectifies a first alternating current that flows to the power receiving resonance circuit, and a first smoothing circuit that is electrically connected to the first rectifier circuit and smooths a rectified voltage. The electronic control circuit is electrically connected to a second rectifier circuit that rectifies a second alternating current that flows to the power receiving coil or a second power receiving coil provided separately from the power receiving coil, and a second smoothing circuit that is electrically connected to the second rectifier circuit and smooths a rectified voltage.

The wireless power receiving device includes: a first power receiving alternating-current circuit including the power receiving resonance circuit and the first rectifier circuit; a first power receiving direct-current circuit including the first smoothing circuit and the load circuit; a second power receiving alternating-current circuit including the second rectifier circuit; a second power receiving direct-current circuit including the second smoothing circuit; and a connection line that electrically connects the first power receiving direct-current circuit and the electronic control circuit.

The electronic control circuit includes a ground terminal. The connection line electrically connects a direct current reference potential of the first power receiving direct-current circuit and the ground terminal through an impedance circuit. In the impedance circuit, an impedance value is set so that a direct current potential of the ground terminal is a same as the direct current reference potential of the first power receiving direct-current circuit and is stabilized and so that the first alternating current or the second alternating current is kept from flowing from the power receiving direct-current circuit to the connection line.

In this configuration, even when the first power receiving direct-current circuit and the electronic control circuit are connected to each other, the impedance circuit causes the ground terminal of the electronic control circuit and the direct current reference potential of the first power receiving direct-current circuit to be at the same potential and keeps the first alternating current or the second alternating current from flowing to the electronic control circuit.

The present invention makes it possible to stabilize the ground potential of the communication circuit and suppress leakage of a noise current generated in the wireless power receiving circuit to the communication circuit.

### Brief Description of Drawings:

Fig. 1 is a diagram illustrating an example of a configuration of a wireless power transfer system including a wireless power receiving device according to a first embodiment of the present invention.
Figs. 2(A) and 2(B) are diagrams illustrating an example of a circuit configuration of an impedance circuit according to the first embodiment of the present invention.
Fig. 3(A) is an equivalent circuit diagram of a portion including the impedance circuit in the wireless power receiving device at a direct current, and Fig. 3(B) is an equivalent circuit diagram of the portion including the impedance circuit in the wireless power receiving device at a noise current of a predetermined frequency.
Fig. 4 is a diagram illustrating an example of a configuration of the wireless power transfer system including a wireless power receiving device according to a second embodiment of the present invention.
Fig. 5 is a diagram illustrating an example of a configuration of the wireless power transfer system including a wireless power receiving device according to a third embodiment of the present invention.
Fig. 6 is a diagram illustrating an example of a configuration of the wireless power transfer system including a wireless power receiving device according to a fourth embodiment of the present invention.
Fig. 7 is a diagram illustrating an example of a configuration of the wireless power transfer system including a wireless power receiving device according to a fifth embodiment of the present invention.

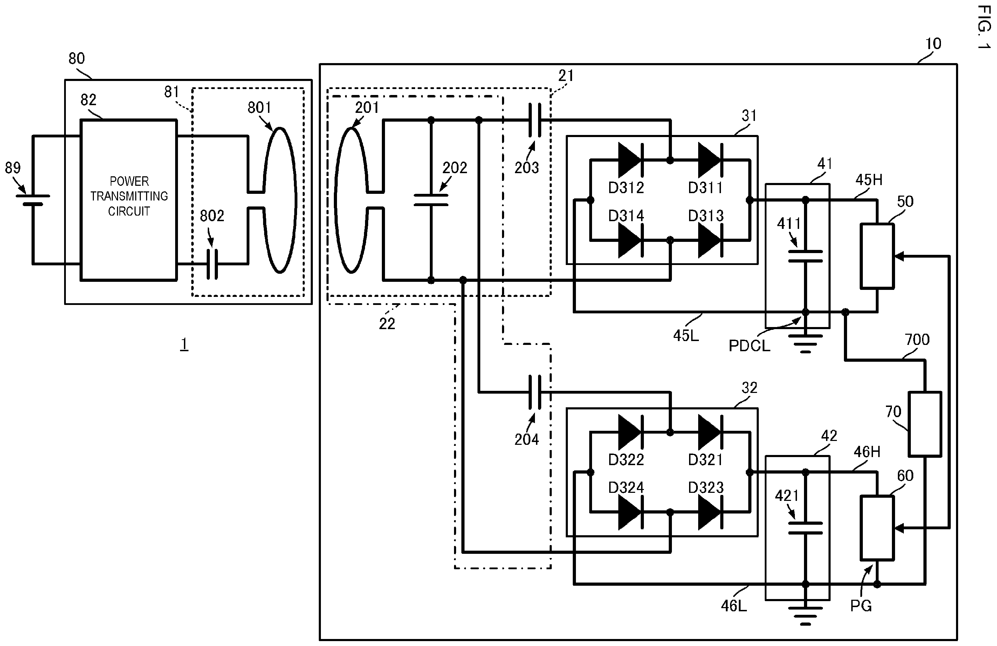

A wireless power receiving device according to a first embodiment of the present invention will be described with reference to the drawings. Fig. 1 is a diagram illustrating an example of a configuration of a wireless power transfer system including the wireless power receiving device according to the first embodiment of the present invention.

As illustrated in Fig. 1, a wireless power transfer system 1 includes a wireless power receiving device 10 and a wireless power transmitting device 80. The wireless power receiving device 10 includes a power receiving resonance circuit 21, a communication resonance circuit 22, a rectifier circuit 31, a rectifier circuit 32, a smoothing circuit 41, a smoothing circuit 42, a load circuit 50, an electronic control circuit 60, and an impedance circuit 70.

The power receiving resonance circuit 21 includes a power receiving coil 201, a power receiving resonance capacitor 202, and a power receiving resonance capacitor 203. The power receiving coil 201 is a loop coil with a predetermined inductance. The power receiving resonance capacitor 202 is connected in parallel with the power receiving coil 201. One terminal of the power receiving resonance capacitor 203 is electrically connected to a node where one terminal of the power receiving coil 201 and one terminal of the power receiving resonance capacitor 202 are connected. A resonant frequency of the power receiving resonance circuit 21 is set to approximately the same frequency as a frequency of an alternating magnetic field to which the power receiving coil 201 couples, in other words, a resonant frequency of a power transmitting resonance circuit 81 (to be described), and also a switching frequency of a power transmitting circuit 82 (to be described).

The rectifier circuit 31 includes a plurality of diodes D311 to D314. An anode of the diode D311 and a cathode of the diode D312 are electrically connected to each other. An anode of the diode D313 and a cathode of the diode D314 are electrically connected to each other. A cathode of the diode D311 and a cathode of the diode D313 are electrically connected to each other. An anode of the diode D312 and an anode of the diode D314 are electrically connected to each other.

A node between the anode of the diode D311 and the cathode of the diode D312 is electrically connected to the other terminal of the power receiving resonance capacitor 203. A node between the anode of the diode D313 and the cathode of the diode D314 is connected to a node where the other terminal of the power receiving coil 201 and the other terminal of the power receiving resonance capacitor 202 in the power receiving resonance circuit 21 are connected.

A node between the cathode of the diode D311 and the cathode of the diode D313 is electrically connected to a Hi-side power feeding line 45H. A node between the anode of the diode D312 and the anode of the diode D314 is electrically connected to a Low-side power feeding line 45L.

The smoothing circuit 41 includes a smoothing capacitor 411. The smoothing capacitor 411 is electrically connected between the Hi-side power feeding line 45H and the Low-side power feeding line 45L.

A Hi-side terminal of the load circuit 50 is electrically connected to the Hi-side power feeding line 45H. A Low-side terminal of the load circuit 50 is electrically connected to the Low-side power feeding line 45L.

The communication resonance circuit 22 includes the power receiving coil 201, the power receiving resonance capacitor 202, and a communication resonance capacitor 204. The power receiving coil 201 and the power receiving resonance capacitor 202 are shared with the power receiving resonance circuit 21. The power receiving resonance capacitor 202 is connected in parallel with the power receiving coil 201. One terminal of the communication resonance capacitor 204 is electrically connected to the node where the one terminal of the power receiving coil 201 and the one terminal of the power receiving resonance capacitor 202 are connected. A resonant frequency of the communication resonance circuit 22 is approximately the same as the resonant frequency of the power receiving resonance circuit.

The rectifier circuit 32 includes a plurality of diodes D321 to D324. An anode of the diode D321 and a cathode of the diode D322 are electrically connected to each other. An anode of the diode D323 and a cathode of the diode D324 are electrically connected to each other. A cathode of the diode D321 and a cathode of the diode D323 are electrically connected to each other. An anode of the diode D322 and an anode of the diode D324 are electrically connected to each other.

A node between the anode of the diode D321 and the cathode of the diode D322 is electrically connected to the other terminal of the communication resonance capacitor 204. A node between the anode of the diode D323 and the cathode of the diode D324 is electrically connected to a node where the other terminal of the power receiving coil 201 and the other terminal of the power receiving resonance capacitor 202 in the communication resonance circuit 22 are connected.

A node between the cathode of the diode D321 and the cathode of the diode D323 is electrically connected to a Hi-side power feeding line 46H. A node between the anode of the diode D322 and the anode of the diode D324 is electrically connected to a Low-side power feeding line 46L.

The smoothing circuit 42 includes a smoothing capacitor 421. The smoothing capacitor 421 is electrically connected between the Hi-side power feeding line 46H and the Low-side power feeding line 46L.

A Hi-side terminal of the electronic control circuit 60 is electrically connected to the Hi-side power feeding line 46H. A Low-side terminal of the electronic control circuit 60 is electrically connected to the Low-side power feeding line 46L.

### (Connection Portion between Power Receiving Circuit and Communication Circuit)

The Low-side power feeding line 45L in the power receiving circuit and the Low-side power feeding line 46L in the communication circuit are electrically connected to each other through a connection line 700. The impedance circuit 70 is connected in series with the connection line 700.

The wireless power transmitting device 80 includes the power transmitting resonance circuit 81 and the power transmitting circuit 82. The power transmitting resonance circuit 81 includes a power transmitting coil 801 that is a loop coil, and a power transmitting resonance capacitor 802. The power transmitting coil 801 and the power transmitting resonance capacitor 802 are connected in series with each other. The power transmitting resonance circuit 81 is electrically connected to the power transmitting circuit 82. A direct-current power supply 89 is electrically connected to the power transmitting circuit 82.

The wireless power receiving device 10 is disposed relative to the wireless power transmitting device 80 so that the power receiving coil 201 couples to the power transmitting coil 801 via an electromagnetic field.

The power transmitting circuit 82 of the wireless power transmitting device 80 is driven by direct current power from the direct-current power supply 89. The power transmitting circuit 82 includes a power conversion circuit having a switching element. The power transmitting circuit 82 converts a direct current into an alternating current based on a switching frequency by controlling the conduction or opening of the switching element of the power conversion circuit and supplies the alternating current to the power transmitting resonance circuit 81.

A resonant frequency (power transmitting resonant frequency) of the power transmitting resonance circuit 81 is set to approximately the same frequency as the switching frequency. The power transmitting coil 801 of the power transmitting resonance circuit 81 is excited by an alternating current of the power transmitting resonant frequency to generate an alternating magnetic field.

The power receiving coil 201 of the wireless power receiving device 10 couples to the alternating magnetic field generated by the power transmitting coil 801, and the power receiving resonance circuit 21 and the communication resonance circuit 22 output a power receiving current.

At this time, the switching frequency of the power transmitting circuit 82, the power transmitting resonant frequency of the power transmitting resonance circuit 81, and a power receiving resonant frequency of the power receiving resonance circuit 21 are set to a predetermined value, and thus the wireless power transmitting device 80 and the wireless power receiving device 10 can achieve wireless power feeding through direct current resonance. When wireless power feeding through direct current resonance is achieved, the wireless power transmitting device 80 can feed power to the wireless power receiving device 10 with low loss and high efficiency.

The rectifier circuit 31 rectifies the alternating current power receiving current output from the power receiving resonance circuit 21 into a direct current. The smoothing circuit 41 smooths a direct current output voltage from the rectifier circuit 31. The smoothed direct current voltage is supplied to the load circuit 50. The rectifier circuit 31 is a first rectifier circuit, and the smoothing circuit 41 is a first smoothing circuit. A circuit including the power receiving resonance circuit 21 and the rectifier circuit 31 is a first power receiving alternating-current circuit, and a circuit including the smoothing circuit 41 and the load circuit 50 is a first power receiving direct-current circuit.

The load circuit 50 is driven by the supplied direct current power and performs predetermined processing. Incidentally, the load circuit 50 includes a circuit (for example, a fingerprint authentication circuit) that provides a predetermined command signal to the electronic control circuit 60. This circuit is driven by the supplied direct current power, performs predetermined control, and provides a command signal to the electronic control circuit 60.

The rectifier circuit 32 rectifies the alternating current power receiving current output from the communication resonance circuit 22 into a direct current. The smoothing circuit 42 smooths a direct current output voltage from the rectifier circuit 32. The smoothed direct current voltage is supplied to the electronic control circuit 60. The rectifier circuit 32 is a second rectifier circuit, and the smoothing circuit 42 is a second smoothing circuit. A circuit including the rectifier circuit 32 is a second power receiving alternating-current circuit, and a circuit including the smoothing circuit 42 is a second power receiving direct-current circuit.

The electronic control circuit 60 is driven by the supplied direct current power and performs predetermined processing. The electronic control circuit 60 includes, for example, a semiconductor IC for RFID or the like. In the electronic control circuit 60, an impedance is changed in accordance with a command signal from the circuit that provides a predetermined command signal in the load circuit 50.

When the impedance of the electronic control circuit 60 is changed, the amplitude of the alternating magnetic field to which the power receiving coil 201 couples, varies. When the amplitude of the alternating magnetic field varies, the amplitude of a power transmitting current that flows through the power transmitting resonance circuit 81 varies. The power transmitting circuit 82 detects variations in the amplitude of the power transmitting current of the power transmitting resonance circuit 81, achieving wireless communication with the electronic control circuit 60.

Thus, the wireless power transfer system 1 can achieve wireless communication between the wireless power transmitting device 80 and the wireless power receiving device 10 while feeding power from the wireless power transmitting device 80 to the wireless power receiving device 10. At this time, since the wireless power transmitting device 80 and the wireless power receiving device 10 achieve wireless power feeding through direct current resonance, power can be fed to the wireless power receiving device 10 with low loss.

Incidentally, it is desirable that a frequency (resonant frequency) of the alternating magnetic field at this time be in a 13.56 MHz band or a 6.78 MHz band. This enables the wireless power transfer system 1 to achieve wireless power feeding and wireless communication by using an ISM band.

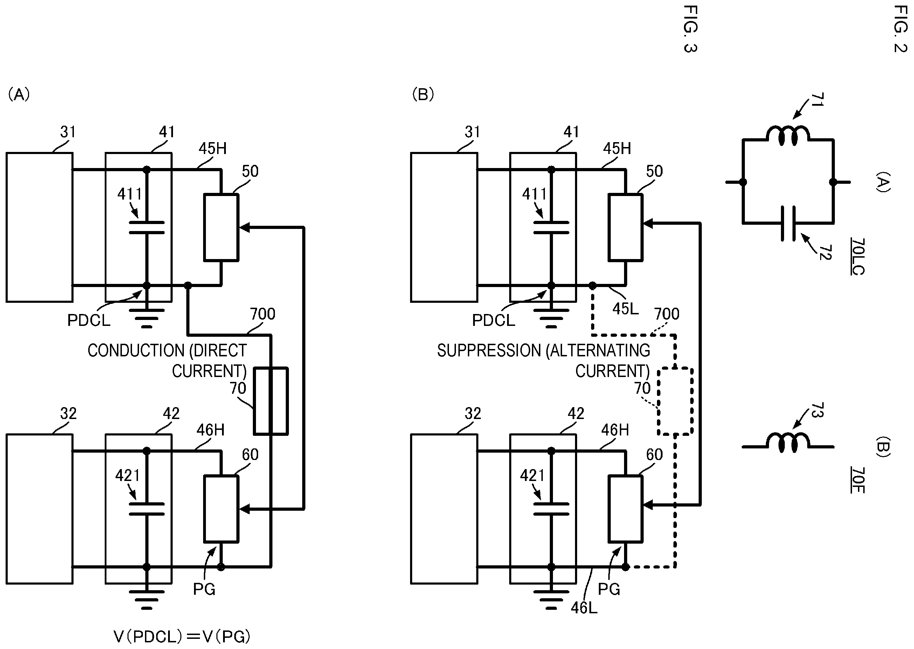

Figs. 2(A) and 2(B) are diagrams illustrating an example of a circuit configuration of the impedance circuit according to the first embodiment of the present invention.

An impedance circuit 70LC illustrated in Fig. 2(A) includes an inductor 71 and a capacitor 72. The inductor 71 and the capacitor 72 are connected in parallel with each other. A resonant frequency of a parallel circuit including the inductor 71 and the capacitor 72 is set to the predetermined frequency described above.

Since the impedance circuit 70LC is an LC parallel resonance circuit, low impedance is exhibited at a direct current, and high impedance is exhibited at the predetermined frequency determined by the inductance of the inductor 71 and the capacitance of the capacitor 72 and in a frequency band near the predetermined frequency.

For this reason, when the impedance circuit 70LC is provided, a direct current reference potential PDCL of the power receiving direct-current circuit in the power receiving circuit conducts with a ground terminal PG of the electronic control circuit 60 in the communication circuit in terms of direct current. This causes the direct current reference potential PDCL of the power receiving direct-current circuit in the power receiving circuit and the ground terminal PG of the electronic control circuit 60 to be at the same potential in terms of direct current. Hence, communication between the load circuit 50 and the electronic control circuit 60 is stable. For example, the electronic control circuit 60 can receive a command signal from the load circuit 50 with stability, and a malfunction can be kept from occurring.

More specifically, in communication between the load circuit 50 and the electronic control circuit 60, High and Low digital signals are transmitted by using a digital circuit. For transitions of the digital signals to High and Low, an alternating current has to flow between grounds of the load circuit 50 and the electronic control circuit 60. In the above-described configuration, the resonant frequency of the LC parallel resonance circuit is not matched to a frequency of a digital signal, but is matched to frequencies of a noise current of the alternating magnetic field and switching noise of a rectifier diode. This enables an alternating current for transitions of digital signals to High and Low to flow while suppressing noise currents (alternating currents) of the power receiving alternating-current circuits. That is, communication using a digital signal is possible even when an impedance element is included. In other words, the impedance circuit 70LC does not suppress all alternating currents, but suppresses noise currents of the power receiving alternating-current circuits.

Furthermore, when the impedance circuit 70LC is provided, an alternating current noise current of the predetermined frequency that flows from the Low-side power feeding line 45L in the power receiving circuit to the Low-side power feeding line 46L in the communication circuit is reduced. Hence, the wireless power receiving device 10 can suppress leakage of an alternating current noise current of the predetermined frequency to the electronic control circuit 60. This suppresses a noise current to be input to the electronic control circuit 60 and stabilizes communication between the load circuit 50 and the electronic control circuit 60. For example, malfunctions of and damage to the electronic control circuit 60 can be reduced.

Additionally, when the resonant frequency of the impedance circuit 70LC coincides with the frequency of the alternating magnetic field, leakage of a noise current due to the alternating magnetic field to the electronic control circuit 60 can be substantially suppressed. This suppresses a noise current caused by the alternating magnetic field to be input to the electronic control circuit 60 and stabilizes communication between the load circuit 50 and the electronic control circuit 60, making it possible to reduce, for example, malfunctions of and damage to the electronic control circuit 60.

An impedance circuit 70F illustrated in Fig. 2(B) includes a ferrite bead 73. The ferrite bead 73 exhibits low impedance at a direct current. The impedance increases as a frequency increases, and high impedance is exhibited at a high frequency. When the impedance circuit 70F includes the ferrite bead 73, the direct current reference potential PDCL of the power receiving direct-current circuit in the power receiving circuit conducts with the ground terminal PG of the electronic control circuit 60 in the communication circuit in terms of direct current. This causes the direct current reference potential PDCL of the power receiving direct-current circuit in the power receiving circuit and the ground terminal PG of the electronic control circuit 60 to be at the same potential in terms of direct current. Hence, communication between the load circuit 50 and the electronic control circuit 60 is stable. For example, the electronic control circuit 60 can receive a command signal from the load circuit 50 with stability, and a malfunction can be kept from occurring.

Furthermore, when the impedance circuit 70F is provided, alternating current noise currents of the predetermined frequency and of frequencies not less than the predetermined frequency that flow from the Low-side power feeding line 45L in the power receiving circuit to the Low-side power feeding line 46L in the communication circuit are reduced. Hence, the wireless power receiving device 10 can suppress leakage of an alternating current noise current to the electronic control circuit 60. This suppresses a noise current to be input to the electronic control circuit 60 and stabilizes communication between the load circuit 50 and the electronic control circuit 60, making it possible to reduce, for example, malfunctions of and damage to the electronic control circuit 60.

Thus, when the impedance circuit 70 (70LC, 70F) is used, a circuit configuration similar to that in Fig. 3(A) can be implemented at a direct current, and a circuit configuration similar to that in Fig. 3(B) can be implemented at a noise current.

Fig. 3(A) is an equivalent circuit diagram of a portion including the impedance circuit in the wireless power receiving device at a direct current, and Fig. 3(B) is an equivalent circuit diagram of the portion including the impedance circuit in the wireless power receiving device at a noise current of the predetermined frequency.

As illustrated in Fig. 3(A), the direct current reference potential PDCL of the power receiving direct-current circuit in the power receiving circuit conducts with the ground terminal PG of the electronic control circuit 60 in the communication circuit at a direct current. This causes the direct current reference potential PDCL of the power receiving direct-current circuit in the power receiving circuit and the ground terminal PG of the electronic control circuit 60 to be at the same potential in terms of direct current.

As illustrated in Fig. 3(B), the equivalent circuit is open between the Low-side power feeding line 45L in the power receiving circuit and the Low-side power feeding line 46L in the communication circuit at a noise current of the predetermined frequency. This suppresses leakage of a noise current from the power receiving circuit to the electronic control circuit 60.

Thus, an alternating current noise current (first alternating current signal) does not flow (is kept from flowing) from the power receiving direct-current circuit in the power receiving circuit to the electronic control circuit in the communication circuit, malfunctions in the electronic control circuit are reduced, and predetermined electrical signal processing can be performed. Furthermore, an alternating current (second alternating current signal) can be kept from flowing from the electronic control circuit to the power receiving direct-current circuit. Hence, a large current caused by this can be kept from flowing to the electronic control circuit and destroying the electronic control circuit, and generation of localized heat can be suppressed. Consequently, the compact, high-performance wireless power receiving device 10 with excellent electromagnetic noise characteristics can be made that suppresses leakage of a noise current, performs stable electrical signal processing, and suppresses generation of localized heat.

In the wireless power receiving device 10, in particular, a current of the power receiving circuit output through the power receiving resonance circuit 21 is larger than a current of the communication circuit output through the communication resonance circuit 22. Hence, a noise current of the power receiving circuit is larger than a noise current of the communication circuit. This causes adverse effects (possibilities of malfunctions and damage) that a noise current of the power receiving circuit has on the electronic control circuit 60 to increase. However, since the above-described configuration suppresses leakage of a noise current of the power receiving circuit to the electronic control circuit 60, malfunctions of and damage to the electronic control circuit 60 are effectively reduced.

Furthermore, in the wireless power receiving device 10, a portion of a circuit including the power receiving resonance circuit 21 and the communication resonance circuit 22 is a shared portion. In the wireless power receiving device 10, a closed loop is formed that includes the portion shared by the power receiving resonance circuit 21 and the communication resonance circuit 22, the rectifier circuit 31 and the smoothing circuit 41 in the power receiving circuit, the connection line 700, and the electronic control circuit 60, the smoothing circuit 42, and the rectifier circuit 32 in the communication circuit. For this reason, a noise current from a power receiving circuit side is likely to flow into a communication circuit side through the connection line 700. However, the impedance circuit 70 is provided to make it difficult for a noise current from the power receiving circuit side to flow into the communication circuit side. Hence, the wireless power receiving device 10 suppresses a noise current to be input to the electronic control circuit 60, making it possible to reduce, for example, malfunctions of and damage to the electronic control circuit 60.

Note that the impedance circuit 70LC and the impedance circuit 70F may be used selectively, or both of them may be used. when the impedance circuit 70LC and the impedance circuit 70F are used selectively, if the impedance circuit 70LC is used, generation of heat due to noise current can be suppressed. On the other hand, if the impedance circuit 70F is used, the reflection of a noise current to a power feeding circuit side can be suppressed.

Furthermore, in the impedance circuit 70, an impedance value only has to be set so that a direct current potential of the ground terminal PG of the electronic control circuit 60 is approximately the same as the direct current reference potential PDCL of the power receiving direct-current circuit in the power receiving circuit and so that an alternating current (noise current) is kept from flowing from the power receiving direct-current circuit in the power receiving circuit to the connection line 700. Hence, the impedance circuit 70 may be, for example, a resistance element. At this time, a resistance value of the resistance element only has to be set so that a potential difference between the direct current potential of the ground terminal PG of the electronic control circuit 60 and the direct current reference potential PDCL of the power receiving direct-current circuit in the power receiving circuit falls within a potential difference that enables stable signal transmission between the load circuit 50 and the electronic control circuit 60.

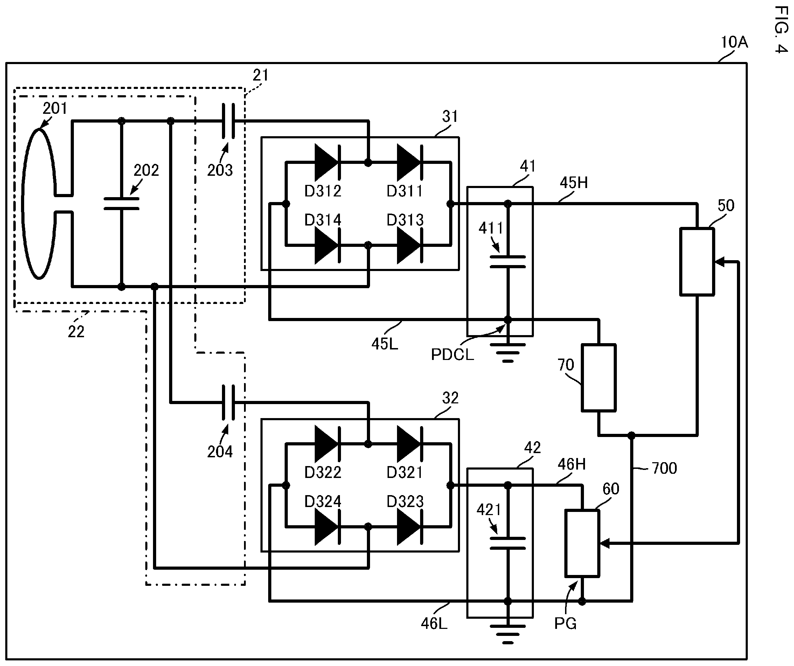

A wireless power receiving device according to a second embodiment of the present invention will be described with reference to the drawing. Fig. 4 is a diagram illustrating an example of a configuration of the wireless power transfer system including the wireless power receiving device according to the second embodiment of the present invention.

As illustrated in Fig. 4, a wireless power receiving device 10A according to the second embodiment differs from the wireless power receiving device 10 according to the first embodiment in a position at which the impedance circuit 70 is connected. Except for the above, the configuration of the wireless power receiving device 10A is similar to that of the wireless power receiving device 10, and a description of similar portions is omitted.

The impedance circuit 70 is connected between a node of the smoothing circuit 41 (smoothing capacitor 411) in the Low-side power feeding line 45L in the power receiving circuit and a negative terminal of the load circuit 50.

This configuration is effective when the impedance of the load circuit 50 is high, in other words, when the load on the load circuit 50 is light, that is, when the current consumption of the load circuit 50 is small.

Such a configuration enables the wireless power receiving device 10A to achieve similar function effects to those of the wireless power receiving device 10.

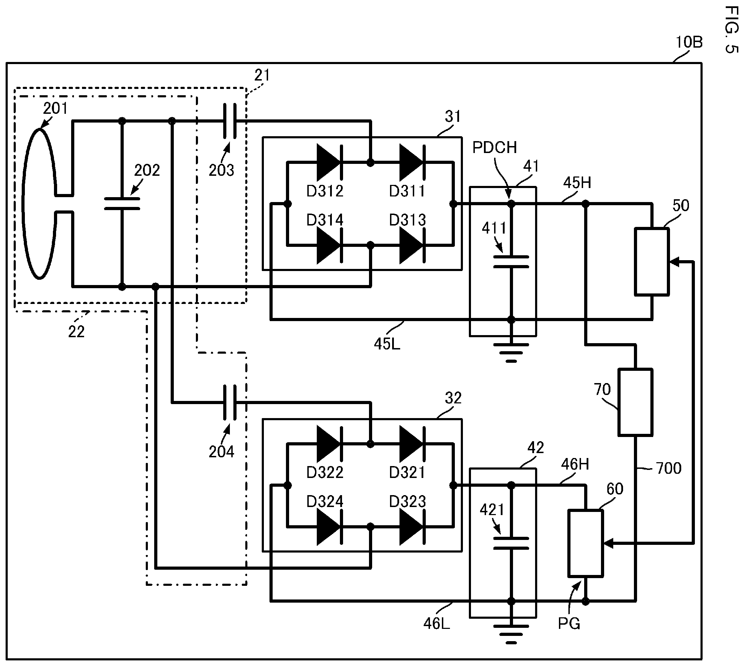

A wireless power receiving device according to a third embodiment of the present invention will be described with reference to the drawing. Fig. 5 is a diagram illustrating an example of a configuration of the wireless power transfer system including the wireless power receiving device according to the third embodiment of the present invention.

As illustrated in Fig. 5, a wireless power receiving device 10B according to the third embodiment differs from the wireless power receiving device 10 according to the first embodiment in a position at which the connection line 700 is connected on the power receiving circuit side. Except for the above, the configuration of the wireless power receiving device 10B is similar to that of the wireless power receiving device 10, and a description of similar portions is omitted.

In the wireless power receiving device 10B, one end of the connection line 700 is connected to the Hi-side power feeding line 45H.

In this configuration, a direct current reference potential PDCH on an Hi side of the power receiving direct-current circuit in the power receiving circuit is connected to the direct current potential of the ground terminal PG of the electronic control circuit 60 through the connection line 700 and the impedance circuit 70.

Such a configuration enables the wireless power receiving device 10B to achieve similar function effects to those of the wireless power receiving device 10.

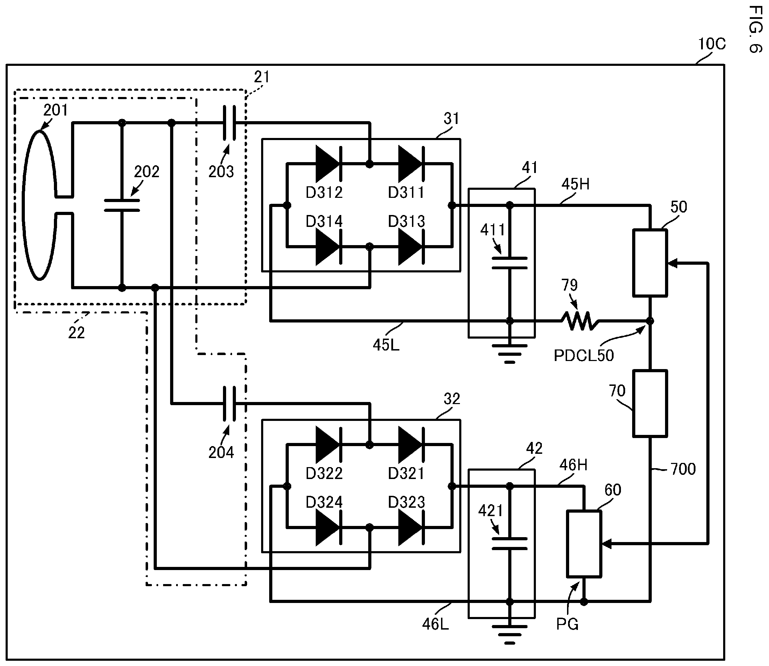

A wireless power receiving device according to a fourth embodiment of the present invention will be described with reference to the drawing. Fig. 6 is a diagram illustrating an example of a configuration of the wireless power transfer system including the wireless power receiving device according to the fourth embodiment of the present invention.

As illustrated in Fig. 6, a wireless power receiving device 10C according to the fourth embodiment differs from the wireless power receiving device 10 according to the first embodiment in a position at which the connection line 700 is connected on the power receiving circuit side. Except for the above, the configuration of the wireless power receiving device 10C is similar to that of the wireless power receiving device 10, and a description of similar portions is omitted.

In the wireless power receiving device 10C, the one end of the connection line 700 is connected to a direct current reference potential PDCL50 based on the negative terminal of the load circuit 50 in the Low-side power feeding line 45L. In other words, a resistance component 79 may be connected in series between a node between the Low-side power feeding line 45L and the connection line 700 and a node between the Low-side power feeding line 45L and the smoothing circuit 41 (smoothing capacitor 411). The resistance component 79 is, for example, a parasitic impedance component of the Low-side power feeding line 45L.

Such a configuration enables the wireless power receiving device 10C to achieve similar function effects to those of the wireless power receiving device 10. Furthermore, the wireless power receiving device 10C is not affected by a potential difference generated by the resistance component 79 at a direct current reference potential between the load circuit 50 and the electronic control circuit 60. Hence, even when the resistance component 79 is present, communication between the load circuit 50 and the electronic control circuit 60 is stable.

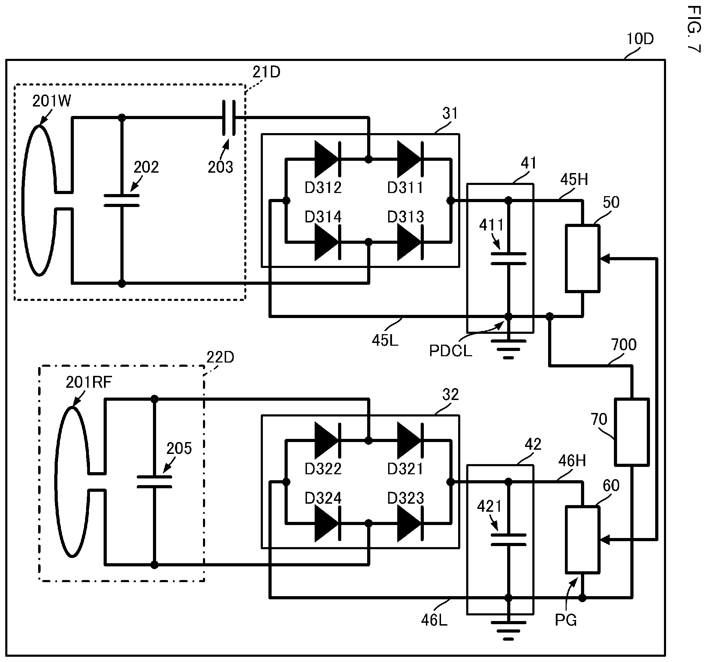

A wireless power receiving device according to a fifth embodiment of the present invention will be described with reference to the drawing. Fig. 7 is a diagram illustrating an example of a configuration of the wireless power transfer system including the wireless power receiving device according to the fifth embodiment of the present invention.

As illustrated in Fig. 7, a wireless power receiving device 10D according to the fifth embodiment differs from the wireless power receiving device 10 according to the first embodiment in that the wireless power receiving device 10D includes a power receiving resonance circuit 21D and a communication resonance circuit 22D separately. Except for the above, the configuration of the wireless power receiving device 10D is similar to that of the wireless power receiving device 10, and a description of similar portions is omitted.

The wireless power receiving device 10D includes the power receiving resonance circuit 21D and the communication resonance circuit 22D. The power receiving resonance circuit 21D includes a power receiving coil 201W, the power receiving resonance capacitor 202, and the power receiving resonance capacitor 203. A configuration of the power receiving resonance circuit 21D is similar to that of the power receiving resonance circuit 21, and a description thereof is omitted.

The communication resonance circuit 22D includes a communication antenna 201RF and a resonance capacitor 205. The communication antenna 201RF is, for example, a loop coil. The resonance capacitor 205 is connected in parallel with the communication antenna 201RF. A resonant frequency of the communication resonance circuit 22D is set to approximately the same frequency as a frequency of an alternating magnetic field.

A node between one terminal of the communication antenna 201RF and one terminal of the resonance capacitor 205 is connected to the node between the anode of the diode D321 and the cathode of the diode D322 in the rectifier circuit 32.

A node between the other terminal of the communication antenna 201RF and the other terminal of the resonance capacitor 205 is connected to the node between the anode of the diode D323 and the cathode of the diode D324 in the rectifier circuit 32.

Thus, in a configuration in which the power receiving coil 201W and the communication antenna 201RF are provided separately, the wireless power receiving device 10D can achieve similar function effects to those of the wireless power receiving device 10. Furthermore, in this configuration, a closed loop is not formed, such as in the wireless power receiving device 10 that achieves power reception and communication by using one coil. Hence, a noise current that leaks from the power receiving circuit to the electronic control circuit 60 is small in comparison with a case where a closed loop is included. For this reason, the impedance of the impedance circuit 70 can be set to be small, and, for example, the impedance circuit 70 can be reduced in size.

Note that the configurations in the embodiments described above can be combined as appropriate, and function effects according to a combination can be achieved.
<1> A wireless power receiving device comprising:
   a power receiving resonance circuit including a power receiving coil and a power receiving resonance capacitor;
   a power receiving circuit electrically connected to the power receiving resonance circuit;
   a load circuit electrically connected to the power receiving circuit and configured to be driven by output power from the power receiving circuit; and
   an electronic control circuit configured to perform predetermined electrical signal processing,
   wherein the power receiving circuit includes
   a first rectifier circuit configured to rectify a first alternating current that flows to the power receiving resonance circuit, and
   a first smoothing circuit electrically connected to the first rectifier circuit and configured to smooth a rectified voltage,
   wherein the electronic control circuit is electrically connected to a second rectifier circuit configured to rectify a second alternating current that flows to the power receiving coil or a second power receiving coil provided separately from the power receiving coil, and
   a second smoothing circuit electrically connected to the second rectifier circuit and configured to smooth a rectified voltage,
   wherein the wireless power receiving device comprises:
      a first power receiving alternating-current circuit including the power receiving resonance circuit and the first rectifier circuit;
      a first power receiving direct-current circuit including the smoothing circuit and the load circuit;
      a second power receiving alternating-current circuit including the second rectifier circuit;
      a second power receiving direct-current circuit including the second smoothing circuit; and
      a connection line configured to electrically connect the first power receiving direct-current circuit and the electronic control circuit,
      wherein the electronic control circuit includes a ground terminal,
      wherein the connection line electrically connects a direct current reference potential of the first power receiving direct-current circuit and the ground terminal through an impedance circuit, and
      wherein, in the impedance circuit, an impedance value is set so that a direct current potential of the ground terminal is a same as the direct current reference potential of the first power receiving direct-current circuit and is stabilized and so that the first alternating current or the second alternating current is kept from flowing from the power receiving direct-current circuit to the connection line.
<2> The wireless power receiving device according to <1>, wherein the direct current reference potential is a potential of a negative terminal of the first smoothing circuit.
<3> The wireless power receiving device according to <1>, wherein the direct current reference potential is a potential of a positive terminal of the first smoothing circuit.
<4> The wireless power receiving device according to <1>, wherein the direct current reference potential is a potential of a negative terminal of the load circuit.
<5> The wireless power receiving device according to any of <1> to <4>, wherein the impedance circuit is composed of a parallel resonance circuit with a capacitor and an inductor.
<6> The wireless power receiving device according to any of <1> to <4>, wherein the impedance circuit is composed of a ferrite bead.
<7> The wireless power receiving device according to any of <1> to <4>, wherein the impedance circuit is composed of a resistor.
<8> The wireless power receiving device according to any of <1> to <7>, wherein the electronic control circuit includes an IC for wireless communication, and
   wherein the IC for wireless communication electrically connects to the power receiving coil and performs wireless communication by using the power receiving coil.
<9> The wireless power receiving device according to any of <1> to <7>, wherein the electronic control circuit includes an IC for wireless communication, and
   wherein the IC for wireless communication connects to a communication antenna different from the power receiving coil and performs wireless communication by using the communication antenna.
<10> The wireless power receiving device according to any of <1> to <9>, wherein the power receiving circuit receives power via a magnetic field of a frequency in a 13.56 MHz band or a 6.78 MHz band.

### Reference Signs List

1 wireless power transfer system
10, 10A, 10B, 10C, 10D wireless power receiving device
21, 21D power receiving resonance circuit
22, 22D communication resonance circuit
31, 32 rectifier circuit
41, 42 smoothing circuit
45H Hi-side power feeding line
45L Low-side power feeding line
46H Hi-side power feeding line
46L Low-side power feeding line
50 load circuit
60 electronic control circuit
70, 70F, 70LC impedance circuit
71 inductor
72 capacitor
73 ferrite bead
79 resistance component
80 wireless power transmitting device
81 power transmitting resonance circuit
82 power transmitting circuit
89 direct-current power supply
201 power receiving coil
201RF communication antenna
201W power receiving coil
202, 203 power receiving resonance capacitor
204 communication resonance capacitor
205 resonance capacitor
411 smoothing capacitor
421 smoothing capacitor
700 connection line
801 power transmitting coil
802 power transmitting resonance capacitor
D311, D312, D313, D314, D321, D322, D323, D324 diode
PDCH, PDCL, PDCL50 direct current reference potential
PG ground terminal

## Claims

1. A wireless power receiving device comprising:
a power receiving resonance circuit including a power receiving coil and a power receiving resonance capacitor;
a power receiving circuit electrically connected to the power receiving resonance circuit;
a load circuit electrically connected to the power receiving circuit and configured to be driven by output power from the power receiving circuit; and
an electronic control circuit configured to perform predetermined electrical signal processing,
wherein the power receiving circuit includes
a first rectifier circuit configured to rectify a first alternating current that flows to the power receiving resonance circuit, and
a first smoothing circuit electrically connected to the first rectifier circuit and configured to smooth a rectified voltage,
wherein the electronic control circuit is electrically connected to a second rectifier circuit configured to rectify a second alternating current that flows to the power receiving coil or a second power receiving coil provided separately from the power receiving coil, and
a second smoothing circuit electrically connected to the second rectifier circuit and configured to smooth a rectified voltage,
wherein the wireless power receiving device comprises:
a first power receiving alternating-current circuit including the power receiving resonance circuit and the first rectifier circuit;
a first power receiving direct-current circuit including the first smoothing circuit and the load circuit;
a second power receiving alternating-current circuit including the second rectifier circuit;
a second power receiving direct-current circuit including the second smoothing circuit; and
a connection line configured to electrically connect the first power receiving direct-current circuit and the electronic control circuit,
wherein the electronic control circuit includes a ground terminal,
wherein the connection line electrically connects a direct current reference potential of the first power receiving direct-current circuit and the ground terminal through an impedance circuit, and
wherein, in the impedance circuit, an impedance value is set so that a direct current potential of the ground terminal is a same as the direct current reference potential of the first power receiving direct-current circuit and is stabilized and so that the first alternating current or the second alternating current is kept from flowing from the power receiving direct-current circuit to the connection line.

2. The wireless power receiving device according to Claim 1,
wherein the direct current reference potential is a potential of a negative terminal of the first smoothing circuit.

3. The wireless power receiving device according to Claim 1,
wherein the direct current reference potential is a potential of a positive terminal of the first smoothing circuit.

4. The wireless power receiving device according to Claim 1,
wherein the direct current reference potential is a potential of a negative terminal of the load circuit.

5. The wireless power receiving device according to any of Claims 1 to 4,
wherein the impedance circuit is composed of a parallel resonance circuit with a capacitor and an inductor.

6. The wireless power receiving device according to any of Claims 1 to 4,
wherein the impedance circuit is composed of a ferrite bead.

7. The wireless power receiving device according to any of Claims 1 to 4,
wherein the impedance circuit is composed of a resistor.

8. The wireless power receiving device according to any of Claims 1 to 4,
wherein the electronic control circuit includes an IC for wireless communication, and
wherein the IC for wireless communication electrically connects to the power receiving coil and performs wireless communication by using the power receiving coil.

9. The wireless power receiving device according to any of Claims 1 to 4,
wherein the electronic control circuit includes an IC for wireless communication, and
wherein the IC for wireless communication connects to a communication antenna different from the power receiving coil and performs wireless communication by using the communication antenna.

10. The wireless power receiving device according to any of Claims 1 to 4,
wherein the power receiving circuit receives power via a magnetic field of a frequency in a 13.56 MHz band or a 6.78 MHz band.
